# NOUVEAU FASCICULE DE BREVET EUROPEEN

(11) **EP 0 512 908 B2**
(45) Date de publication et mention de la décision concernant l'opposition: **05.02.2003**
(45) Mention de la délivrance du brevet: 07.07.1999
(21) Numéro de dépôt: 92401248.7
(22) Date de dépôt: 30.04.1992
(51) Int. Cl.: C03C 25/00, C03C 25/14, C08G 14/08

(54) **Procédé de préparation d'un liant phénolique**
Verfahren zur Herstellung eines Phenolharz-Bindemittels
Method of producing a phenolic binder

(30) Priorité: 09.05.1991 US 697765; 05.08.1991 US 740599
(43) Date de publication de la demande: 11.11.1992
(73) Titulaire: SAINT-GOBAIN ISOVER, 92400 Courbevoie (FR)
(72) Inventeur: Coventry, Kathleen H., Exton, PA 19341 (US); Segal, David A., Hatfield, PA 19440 (US)
(74) Mandataire: Le Vaguerèse, Sylvain Jacques

(56) Documents cités:
- EP-A- 0 190 468
- EP-A- 0 480 778
- CA-A- 1 001 788
- FR-A- 2 139 756
- US-A- 3 616 179
- US-A- 3 956 204
- US-A- 4 904 516
- File supplier PAJ/JPO & JP-A-57159809 (Sumitomo Durez) 2/10 82 *abstract*

## Description

La présente invention concerne la fabrication de matériaux isolants en fibres de verre et plus particulièrement la préparation de liants phénoliques pour les fibres minérales telles que les fibres de verre.

Les dispersions aqueuses de résols phénol-formaldéhyde sont d'usage fréquent dans la fabrication des matériaux isolants en fibres de verre, comme les matelas isolants pour les murs, toitures et plafonds, les enveloppements isolants pour les conduites et analogues. Typiquement, après que les fibres de verre ont été formées, les fibres encore chaudes reçoivent une pulvérisation de la dispersion aqueuse de liant dans une chambre ou hotte de formage, les fibres étant collectées sur une courroie transporteuse sous la forme d'une masse semblable à de la laine en association avec le liant. Dans certains cas, une nappe de fibres de verre reçoit une pulvérisation de la dispersion aqueuse. Les résols modifiés à l'urée ont été utilisés à cet effet, l'urée contribuant à la résistance au phénomène de coloration désigné sous le terme anglais de "punking", qui apparaît dans les produits de fibres minérales, phénomène dû à l'oxydation du liant au-delà d'une certaine température, et réduisant l'abondance des agents volatils dégagés lorsque la résine est durcie à température élevée.

Fréquemment, dans la fabrication des matériaux isolants en fibres de verre, le résol aqueux est préparé avant la préparation du liant ou est fourni par un fabricant de résine et conservé jusque peu avant son utilisation. Le résol est typiquement préparé par réaction du phénol avec Je formaldéhyde dans des conditions basiques, le mélange de réaction résultant étant neutralisé jusqu'à un pH faiblement basique par addition d'un acide fort. Ensuite, le liant est préparé en ajoutant au résol de l'urée, un catalyseur acide pour faire durcir la résine et de l'eau pour diluer la dispersion, outre facultativement d'autres constituants, tels qu'un silane promoteur de l'adhérence sur le verre et une émulsion d'huile lubrifiante.

De préférence, le liant est préparé par réaction préalable du résol avec l'urée à peu près à la température ambiante pour former un "prémélange" pour le liant. Juste avant l'utilisation, le liant est préparé par addition des constituants restants.

La réaction préalable de l'urée avec le résol pour former un prémélange présente des difficultés de mise en oeuvre. Outre des moyens de stockage pour le résol, l'urée et le liant, des moyens supplémentaires sont nécessaires pour le prémélange. L'organisation de la préparation est aussi plus compliquée. Dans certains cas, il est préférable de laisser le prémélange réagir au préalable pendant une durée minimum après l'opération de mélange et avant la préparation du liant. Pour cette raison, la commande de liant doit être correctement anticipée pour assurer qu'une quantité adéquate de prémélange soit disponible tout en évitant le gaspillage d'un excès.

Dans le cas idéal, toute l'urée nécessaire devrait être ajoutée au résol au moment de la fabrication de la résine. Ce résol modifié par l'urée devrait conduire à une préparation simplifiée du liant sans les difficultés de mise en oeuvre tenant à la préparation du prémélange.

Toutefois, la préparation du résol modifié par l'urée peut conduire à des difficultés de manipulation en aval, spécifiquement le durcissement partiel du liant se traduit par une réduction de l'élasticité du mat de fibres de verre juste avant que celui-ci entre dans le four de durcissement et par un toucher poisseux et trop sec du mat. De surcroît, la modification du résol par l'urée fait baisser la stabilité de la résine. Il existe un besoin pour un procédé perfectionné de préparation d'un résol modifié par l'urée ayant une plus grande stabilité, avec un prédurcissement sensiblement réduit du liant résultant à base du résol modifié par l'urée et une meilleure durée de conservation avant emploi.

L'utilisation de l'urée et de l'ammoniac comme capteurs du formaldéhyde avant la neutralisation d'une résine de condensation phénol-formaldéhyde en deux étapes est décrite dans le brevet US-3 956 205. Le brevet US Reissue 30 375 décrit l'utilisation de l'ammoniac pour élever le pH d'un liant comprenant un résol, de l'urée et un catalyseur acide en vue du durcissement à température élevée du liant. Le brevet US-4 757 108 décrit une composition de résol phénolique et d'urée obtenue par réaction de l'urée avec le formaldéhyde libre du résol phénolique dans des conditions acides, la composition étant ensuite rendue neutre ou faiblement basique par une nouvelle addition d'urée.

Par ailleurs, EP-A-0 190 468 décrit l'utilisation d'urée en fin de réaction phénol + formaldéhyde, ainsi que l'éventuelle utilisation d'ammoniac, mais dans des conditions incompatibles avec une absence de pré-gélification de la résine.

FR-A-2 139 756 décrit l'optimisation de la précipitation des ions calcium du catalyseur de la réaction phénol + aldéhyde par ajout d'un sel d'ammonium, et d'ammoniac servant uniquement à ajuster le pH ; de l'urée n'est pas mise en oeuvre.

US-A-3 956 204 décrit la condensation de phénol et de formaldéhyde selon un procédé complexe comportant une première étape à catalyse acide et une seconde à catalyse basique.

Enfin, JP-A-57-159809 décrit une résine pour solution d'encollage, faite de condensats phénol-formaldéhyde ; la teneur de la résine finale en formaldéhyde libre est importante, de l'ordre de 10 à 40% en poids de matière sèche.

La présente invention a pour objet un procédé pour préparer un liant phénolique pour des fibres minérales, notamment de verre. Ce procédé comprend la préparation d'un résol phénol-formaldéhyde soluble dans l'eau modifié par l'urée. La stabilité au stockage du résol modifé préparé par le procédé de la présente invention est de facon inattendue sensiblement supérieure à celle des résines phénoliques modifiées par l'urée préparées par les procédés antérieurs. De surcroît, le procédé de l'invention réduit de façon inattendue significativement le pré-durcissement et augmente la durée de conservation avant emploi d'un liant préparé à l'aide du résol modifié de la présente invention.

Le procédé de la présente invention comprend la préparation d'un résol phénol-formaldéhyde qui présente de préférence un rapport molaire du formaldéhyde au phénol d'environ 2,5:1 à 4,2:1. De préférence, un mélange aqueux de formaldéhyde et de phénol est maintenu à une première température d'environ 40°C à 50°C tandis qu'un catalyseur de polymérisation basique, comme l'hydroxyde de sodium, est ajouté. La température est ensuite de préférence admise à s'élever jusqu'à une deuxième température entre environ 60°C et 80°C en une durée d'environ 30 minutes. Cette deuxième température est de préférence maintenue jusqu'à ce que la teneur en formaldéhyde libre du mélange aqueux tombe à environ 40% du poids du formaldéhyde libre dans le mélange de départ. Ensuite, le mélange est de préférence refroidi jusqu'à une température entre environ 20°C et 30°C et le mélange aqueux est de préférence neutralisé, par exemple par addition d'acide sulfurique, de préférence jusqu'à un pH d'environ 7,2 à 7,6.

Après que le mélange aqueux a été neutralisé, deux réactifs azotés, l'ammoniaque et l'urée, sont ajoutés pour former un mélange de réaction donnant une résine modifiée. L'ammoniaque est de préférence ajoutée en quantité suffisante pour arriver à un rapport pondéral de l'ammoniaque (sur la base de NH₃) aux solides de la résine (c'est-à-dire les solides dus au résol non modifié) dans la résine modifiée d'environ 1,0:100 à 3,0:100. Il est préférable que la résine phénol-formaldéhyde présente un rapport molaire du formaldéhyde au phénol d'environ 3,2:1 à 4,0:1. De préférence, le rapport molaire de l'urée ajoutée au formaldéhyde libre dans le mélange aqueux comprenant la résine phénol-formaldéhyde est d'environ 1:1 à 1,75:1.

L'ammoniaque et l'urée sont ajoutées après que le mélange aqueux a été neutralisé, par exemple dans un délai d'environ 3 jours après la neutralisation. Dans ce cas, le mélange aqueux comprenant le résol est de préférence stocké à une température d'environ 4 à 13°C (40 à 55°F) après la neutralisation.

Le procédé comprend aussi la réaction de l'urée avec le résol pendant au moins environ 2 heures et 30 minutes (ou environ 5 heures à 20°C) et ensuite l'achèvement de la préparation du liant par addition d'un catalyseur pour faire durcir le résol modifié par l'urée à une température élevée. De préférence, le prémélange de résol, d'urée et d'ammoniaque est agité suffisamment pour assurer le mélange intime des constituants. De préférence, le mélange aqueux est maintenu à une température d'environ 5°C à 30°C avant l'achèvement de la préparation du liant.

De façon avantageuse et inattendue, le résol modifié préparé par le procédé de l'invention peut être stocké pendant jusqu'à 2 semaines à une température d'environ 10°C (50°F) sans perte notable de ses propriétés.

Pour achever la préparation de la composition aqueuse de liant pour les fibres minérales, d'autres composants typiques pour un liant, comme un acide catalysant le durcissement à température élevée, une huile minérale lubrifiante et un organo-silane promoteur d'adhérence peuvent être ajoutés au mélange aqueux du résol modifié. Ces constituants peuvent être ajoutés au mélange aqueux de résol modifié peu avant l'application du liant sur les fibres de verre.

Par comparaison avec un procédé par ailleurs semblable dans lequel l'ammoniaque est omise, le liant préparé par le procédé de l'invention manifeste un prédurcissement réduit et dès lors des performances améliorées.

Le résol phénol-formaldéhyde utilisé dans le procédé de la présente invention peut être préparé suivant des procédés classiques connus de l'homme de métier, comme ceux menant à un résol soluble dans l'eau et utilisant du phénol et du formaldéhyde de qualité industrielle. La préparation de ces résols est passée en revue et décrite dans R.W. Martin, The Chemistry of Phenolic Resins (John Wiley & Sons, Inc., New York 1956) aux pages 88 à 97.

Le procédé de la présente invention comprend la préparation d'un résol phénol-formaldéhyde soluble dans l'eau. Une condensation du phénol et de l'aldéhyde catalysée par une base est typiquement appliquée à la préparation de la résine. La réaction, qui est exothermique, est amorcée par l'addition du catalyseur après que le phénol et l'aldéhyde ont été mélangés. Le rapport du phénol à l'aldéhyde est choisi pour donner une résine de type résol (excès stoechiométrique de formaldéhyde); lorsque le formaldéhyde et le phénol sont utilisés, le rapport molaire du formaldéhyde au phénol étant de préférence d'environ 2,5:1 à 4,2:1 et plus avantageusement d'environ 3,2:1 à 4,0:1. Un mélange aqueux de formaldéhyde et de phénol est maintenu à une première température d'environ 40°C à 50°C tandis qu'un catalyseur de polymérisation basique est ajouté.

Le catalyseur utilisé dans le procédé de préparation du résol peut comprendre au moins une base de métal alcalin ou de métal alcalino-terreux. Des exemples de bases de métaux alcalins qui peuvent être utilisées sont notamment les hydroxydes de sodium, de potassium et de lithium. Des exemples de bases de métaux alcalino-terreux qui peuvent être utilisées sont notamment les oxydes et hydroxydes de calcium, de baryum et de strontium, comme l'oxyde de calcium et l'hydroxyde de calcium. L'hydroxyde de potassium ou l'hydroxyde de sodium est préféré à l'hydroxyde de calcium parce que les bases de métaux alcalins se révèlent conférer une plus grande stabilité que l'hydroxyde de calcium dans le procédé de l'invention. D'autres substances fortement alcalines solubles dans l'eau qui ne réagissent pas avec le formaldéhyde, comme les amines tertiaires et analogues, peuvent aussi être utilisées pour catalyser la préparation du résol.

Ensuite, la température est admise à monter de la première température à une deuxième température entre environ 60°C et 80°C. La durée requise pour que l'élévation de température ait lieu dépend de l'échelle à laquelle la réaction exothermique est exécutée. A l'échelle industrielle, cette élévation de température peut avoir lieu en une durée d'environ 30 minutes. Si la chose est souhaitée, le réacteur peut être refroidi pour ralentir l'élévation de la température.

Cette deuxième température est de préférence maintenue jusqu'à ce que la teneur en formaldéhyde libre du mélange aqueux diminue d'environ 65% de la teneur initiale en formaldéhyde libre et de préférence d'environ 60% de la teneur initiale en formaldéhyde libre, sur base pondérale. Sans être lié par une explication spécifique quelconque du processus, l'hypothèse est que la teneur en formaldéhyde libre résiduel quelque peu plus élevée (baisse de 60% contre baisse de 65%) améliore la stabilité au stockage de la résine modifiée. La baisse réelle est influencée par le rapport initial du formaldéhyde au phénol.

Ensuite, le mélange aqueux est refroidi, jusqu'à une température entre environ 20°C et 30°C et le mélange aqueux est neutralisé, par exemple par addition d'un acide fort tel que l'acide sulfurique, de préférence jusqu'à un pH d'environ 7,2 à 7,6.

Typiquement, le procédé est conduit pour former un résol aqueux ayant une teneur totale en matières sèches d'environ 40 à 50% en poids. Le résol aqueux peut aussi comprendre de faibles quantités de formaldéhyde résiduel, par exemple jusqu'à environ 15% en poids, et de faibles quantités de phénol résiduel, par exemple jusqu'à environ 2% en poids. De surcroît, le résol aqueux contient typiquement de faibles quantités de sels résiduels de sodium, de calcium et analogues provenant de la polymérisation de la résine.

Après que la préparation du résol aqueux a été achevée, la résine aqueuse peut être conditionnée, par exemple dans des barils, et stockée jusqu'à nécessité, ou bien transférée à un véhicule de transport comme un camion-citerne ou wagon-citerne et expédiée à un autre endroit où il faut produire le liant pour les articles en fibres minérales. Dans une forme de réalisation actuellement préférée de la présente invention, le résol aqueux est modifié au site de production de la résine par addition de deux réactants azotés, l'urée et l'ammoniaque.

Le résol aqueux produit est utilisé pour préparer un liant aqueux destiné à des articles formés en utilisant des fibres minérales par le procédé de la présente invention. Typiquement, dans ces produits manufacturés, les fibres minérales, comme les fibres de verre, sont initialement transformées en un mat non tissé. Un liant aqueux comprenant le résol modifié par l'urée est typiquement appliqué en pulvérisation sur les fibres de verre nouvellement formées et encore chaudes dans une chambre de formage ou appareil semblable pour donner une masse semblable à de la laine comprenant les fibres de verre liées par le liant résineux modifié. Les caractéristiques et l'utilité du produit manufacturé obtenu sont déterminées dans une certaine mesure par la nature des fibres minérales utilisées, la longueur et le diamètre des fibres, la densité, l'oxydation et la concentration des fibres dans le mat, et ainsi de suite. Pour certaines applications, il peut être souhaitable de tisser les fibres ou de former au moyen de celles-ci une étoffe d'une autre façon.

Le liant aqueux est typiquement préparé dans les procédés antérieurs en mélangeant d'abord le résol phénol-formaldéhyde aqueux avec un seul réactif azoté, de préférence l'urée, et en ajoutant de l'eau pour ajuster la teneur en matière sèche, pour obtenir un prémélange.

Dans le procédé de la présente invention, deux réactifs azotés sont utilisés pour former un résol phénolique modifié à utiliser au lieu d'un "prémélange".

Un composant azoté utilisé dans la réaction est l'ammoniaque. L'autre réactant azoté est l'urée.

De préférence, le rapport pondéral du premier réactant azoté au résol non modifié est d'environ 1,0:100 à 3,0:100. De préférence, le deuxième réactif azoté est ajouté en une quantité suffisante pour réagir avec sensiblement tout le formaldéhyde résiduel dans le résol. Le rapport molaire de l'urée au formaldéhyde libre dans le mélange aqueux comprenant le résol est de préférence d'environ 1:1 à 1,75:1. Une solution aqueuse d'urée peut être utilisée avec avantage, par exemple une solution aqueuse contenant environ 30% en poids d'urée. Lors du mélange des réactifs azotés avec le résol aqueux, on observe une augmentation de l'alcalinité du mélange aqueux, par exemple une élévation du pH d'un intervalle de 7,2 à 7,6 jusqu'à un intervalle de 8,2 à 8,6.

Dans une forme de réalisation actuellement préférée du procédé de l'invention, l'urée et l'ammoniaque sont ajoutées directement au mélange de résol aqueux, après que le mélange aqueux a été neutralisé, de préférence pas plus d'environ 3 jours après la neutralisation du mélange de réaction. De façon avantageuse, l'urée et l'ammoniaque peuvent être ajoutées juste après la neutralisation. De préférence, le mélange de réaction aqueux ainsi obtenu est agité pendant un temps au moins suffisant pour assurer la dispersion complète du résol, de l'urée et de l'ammoniaque, par exemple pendant au moins environ 30 à 60 minutes, à l'aide d'un appareil classique pour le mélange de liquides.

Le procédé perfectionné de la présente invention prévoit aussi d'admettre les réactifs azotés à réagir avec le résol phénol-formaldéhyde en attendant pendant au moins environ 5 heures après que les réactifs azotés ont été mélangés avec le résol. De préférence, le résol et les réactifs azotés sont admis à réagir pendant environ 8 à 10 heures. Le choix de la durée de réaction permet de réduire au minimum la teneur en formaldéhyde libre tout en conservant la tolérance à l'eau (c'est-à-dire l'aptitude à la dilution par l'eau) du mélange. La durée de réaction dépend de la température de réaction. De préférence, le résol et les réactifs azotés sont admis à réagir à une température d'environ 5°C à 30°C. Par exemple, lorsque le prémélange est préparé pendant les mois d'hiver dans des bâtiments non chauffés, l'action de prémélange pendant des durées excédant les 10 heures n'est pas de nature à nuire à la stabilité du liant produit par le procédé de l'invention. Réciproquement, lorsque le prémélange est préparé pendant les mois d'été chauds, des durées de réaction excédant 8 à 10 heures peuvent nuire à la stabilité du liant. Si la chose est souhaitée, l'agitation peut être poursuivie pendant toute la durée de réaction.

Si le mélange aqueux neutralisé comprenant le résol est conservé pendant un certain temps avant l'addition des réactifs azotés, il est préféré que le mélange aqueux soit stocké à une température inférieure à la température ambiante, par exemple d'environ 4 à 13°C (40 à 55°F).

La résine phénolique modifiée par l'urée préparée suivant la forme de réalisation actuellement préférée de la présente invention a une stabilité au stockage d'au moins environ deux semaines à des températures s'élevant jusqu'à environ 10°C (50°F).

Le procédé de la présente invention peut comprendre ensuite l'achèvement de la préparation du liant par addition d'un catalyseur, comme un catalyseur acide, pour le durcissement du résol modifié par l'urée.

Des exemples de catalyseurs pour le durcissement du résol modifié par l'urée sont notamment les catalyseurs acides tels que les sels, de préférence d'ammonium ou d'aminés, d'acides, comme le sulfate d'ammonium, le phosphate d'ammonium, le sulfamate d'ammonium, le carbonate d'ammonium, l'acétate d'ammonium, le maléate d'ammonium et analogues. Le catalyseur acide peut être ajouté en une quantité de 0,1 à 5% en poids, sur la base du poids du résol et de l'urée.

L'achèvement de la préparation du liant peut comprendre aussi l'addition d'une composition lubrifiante, comme une émulsion d'huile minérale, et d'une matière favorisant l'adhérence du résol modifié aux fibres de verre, comme un silane approprié. Un exemple d'un silane améliorant l'adhérence qui peut être ajouté est le 3-aminopropyl-triéthoxysilane ou l'aminoéthyl-propyl-triméthoxysilane. D'autres additifs, comme des fibres minérales finement divisées, des résines organiques non réactives telles que la résine Vinsol (marque déposée d'Hercules) (issue de la colophane), le tallol, des tensioactifs tels que des lignosulfonates salins, des épaississants et régulateurs de rhéologie, des colorants, des additifs colorés, de l'eau et analogues, peuvent aussi être ajoutés au liant aqueux.

Le liant aqueux préparé par le procédé de la présente invention a une stabilité améliorée lui conférant une durée d'emploi d'au moins environ 24 heures et un prédurcissement réduit, par comparaison avec des liants préparés au moyen d'urée comme unique réactant azoté.

Avant l'application du liant, celui-ci peut être dilué par addition d'eau pour arriver à une concentration convenant pour l'application sur les fibres minérales chaudes ou sur la nappe ou le mat de fibres minérales. Par exemple, de l'eau peut être ajoutée pour arriver à une teneur totale en matière sèche d'environ 1 à 80% en poids.

Le liant aqueux peut être appliqué directement sur les fibres de verre nouvellement formées encore chaudes ou sur un mat ou un tissu de fibres minérales, et être ensuite séché et durci pour la formation du produit manufacturé. Les fibres minérales peuvent être des fibres de verre et le mat peut être un mat non tissé. Les fibres minérales peuvent être continues ou hachées et peuvent prendre la forme de laine de fibres minérales. Lorsque des fibres de verre sont utilisées, elles peuvent être produites par tout procédé classique, par exemple par soufflage à la flamme ou à la vapeur d'eau, par filage centrifuge ou analogue. La forme des fibres, leur densité, la longueur des fibres, l'orientation des fibres et des caractéristiques analogues du mat de fibres dépendent de l'application envisagée pour les produits manufacturés qui sont fabriqués. Une application spécialement importante est l'isolation thermique. Dans ce cas, les mats de fibres prennent la forme de rouleaux continus ou de matelas de fibres de verre non tissées orientées au hasard. Un mat semblable est utilisé pour fabriquer des matelas de fibres de verre pour l'isolation acoustique.

Lorsqu'il y a lieu de produire un isolant thermique et acoustique en fibres de verre, les fibres de verre nouvellement formées et encore chaudes reçoivent typiquement en pulvérisation, dans une chambre ou hotte de formage, le liant aqueux en vue de l'étalement d'un revêtement du liant sur les fibres, spécialement aux points de contact entre les fibres. Ensuite, le mat revêtu de la solution aqueuse du liant peut être séché à chaud pour chasser l'eau si les fibres chaudes n'ont pas une capacité calorifique suffisante pour chasser l'eau. Dans l'un et l'autre cas, les composés résineux comprenant le résol et le réactif azoté sont durcis en formant un liant infusible pour le mat de fibres minérales.

Le procédé de la présente invention peut être appliqué aussi à la préparation de liants destinés à d'autres articles en fibres minérales, comme des séparateurs de batterie, des panneaux de circuit imprimé, des isolants électriques, de même que pour des produits de transformation du bois, comme des panneaux de particules, des panneaux de copeaux, du contre-plaqué et analogues.

Les exemples suivants sont illustratifs des procédés, des compositions et des produits manufacturés de la présente invention et sont utiles à l'homme de métier pour la mise en pratique de cette dernière. Toutefois, l'invention n'est nullement limitée par ces exemples. Sauf indication contraire, tous les pourcentages sont donnés sur une base pondérale dans les exemples suivants.

### EXEMPLES 1 ET 2.-

On introduit 100 parties de phénol de qualité industrielle et 255 parties d'une solution aqueuse à 50% (p/p) de formaldéhyde dans un réacteur. On chauffe le réacteur et on agite son contenu jusqu'à ce que la température du mélange se stabilise à 45°C. On maintient la température à une première température de 45°C et on ajoute 10 parties d'hydroxyde de sodium à 50% (p/p) à un taux d'introduction dans le réacteur constant en une durée de 30 minutes. On laisse la température ensuite s'élever jusqu'à une deuxième température de 70°C en 30 minutes et on maintient cette deuxième température pendant 90 minutes. On refroidit le mélange de réaction jusqu'à une troisième température, à savoir 24°C, en 15 minutes. On ajuste le pH de la résine par addition de 17,5 parties d'une solution aqueuse à 25% (p/p) d'acide sulfurique pour atteindre un pH de 7,2. Ensuite, on ajoute 13,6 parties de solution aqueuse d'ammoniaque à 29% et 107,0 parties d'urée en grenailles au résol sous agitation pour obtenir un mélange aqueux de résol modifié par l'urée (exemple 1). Le pH final est de 7,93.

On répète le procédé, sauf que la durée à la deuxième température, à savoir 70°C, est de 100 minutes (exemple 2).

On répète le procédé une nouvelle fois, sauf qu'on n'ajoute pas d'ammoniaque (exemple de comparaison 1).

On stocke toutes les résines aqueuses à 13°C (55°F). L'exemple 1 et l'exemple de comparaison 1 ont chacun une stabilité (définie par l'absence de retombée visible) de 2,5 semaines. L'exemple 2 a une stabilité de 2,0 semaines.

On utilise l'exemple 1 et l'exemple de comparaison 1 pour préparer des liants par addition d'un catalyseur acide. L'analyse thermique par calorimétrie différentielle révèle un prédurcissement considérable pour l'exemple de comparaison 1. Le liant préparé à l'aide de la résine du procédé de l'invention manifeste un prédurcissement minimal.

### EXEMPLES 3 A 5.-

A 3,45 parties en poids d'un résol formaldéhyde-phénol présentant un rapport molaire du formaldéhyde au phénol de 4:1, ayant une teneur en matière sèche de 46%, en phénol libre de 0,8% et en formaldéhyde libre de 9,0% et préparé avec une résine sodique catalytique, on ajoute 1,963 partie en poids d'une solution aqueuse à 40% d'urée, 0,651 partie en poids d'eau et 0,0825 partie en poids d'une solution aqueuse ammoniacale à 29% (en hydroxyde d'ammonium). On agite le prémélange résultant pendant 18 heures à la température ambiante. Ensuite, on ajoute du sulfate d'ammonium comme catalyseur et de l'eau de dilution en quantités appropriées pour obtenir un liant conforme à la présente invention (exemple 3). On répète le procédé, sauf qu'on omet l'ammoniac (exemple de comparaison). On répète le procédé une nouvelle fois sauf qu'on utilise 0, 15 partie en poids d'ammoniaque aqueuse pour obtenir un autre liant de la présente invention (exemple 4). On répète le procédé une fois encore en utilisant 0,2025 partie en poids d'ammoniaque aqueuse pour obtenir un troisième liant conforme à la présente invention (exemple 5). En observant le degré de précipitation ("retombée") dans les liants lors du stockage à la température ambiante, on évalue la stabilité des liants, qui est mentionnée au tableau I. Les résultats rassemblés au tableau I montrent la stabilité améliorée du liant préparé par le procédé de la présente invention.

**TABLEAU I**

| Exemple | Rapport en poids NH₃:résine/urée | Degré de précipitation | | |
|---|---|---|---|---|
| | | 24 heures | 48 heures | 72 heures |
| Comparaison | 0 | complète | - | - |
| 3 | 1,0 | nulle | nulle | faible |
| 4 | 2,0 | nulle | - | - |
| 5 | 2,5 | nulle | nulle | nulle |

On répète le procédé de l'exemple 4, sauf qu'on l'exécute à l'échelle industrielle, qu'on conserve le prémélange pendant 8 heures avant d'ajouter le catalyseur acide de durcissement et qu'on ajoute aussi une émulsion d'huile minérale lubrifiante et un silane promoteur d'adhérence au liant (exemple 6). On observe une amélioration significative du procédé et du liant obtenu.

## Revendications

1. Procédé de préparation d'un liant phénolique pour des fibres minérales, notamment de verre, le procédé comprenant :
a) la préparation en une étape d'un résol phénol-formaldéhyde soluble dans l'eau par :
1/ préparation d'un mélange aqueux initial comprenant du formaldéhyde et du phénol,
2/ maintien du mélange aqueux à une première température d'environ 40°C à 50°C pendant l'addition d'un catalyseur de polymérisation basique,
3/ admission de la température du mélange aqueux à s'élever jusqu'à une deuxième température entre environ 60°C et 80°C,
4/ maintien du mélange aqueux à la deuxième température pendant la réaction du phénol et du formaldéhyde pour former le résol phénol-formaldéhyde soluble dans l'eau jusqu'à ce que le formaldéhyde libre du mélange aqueux tombe à une teneur définie au préalable,
5/ refroidissement du mélange aqueux jusqu'à une troisième température entre 20°C et 30°C, et,
6/ neutralisation du mélange aqueux après le refroidissement a) 5/,
b) la préparation d'un mélange de réaction aqueux constitué dudit résol phénol-formaldéhyde, de l'urée et de l'ammoniaque après la neutralisation a) 6/,
c) l'admission de l'urée à réagir avec le résol phénol-formaldéhyde en attendant de préférence pendant au moins environ 30 minutes après que l'urée et le résol ont été mélangés, pour former une résine modifiée, et,
d) ensuite, l'achèvement de la préparation du liant par addition d'un catalyseur pour le durcissement du résol modifié.

2. Procédé suivant la revendication 1 dans lequel la résine phénol-formaldéhyde présente un rapport molaire du formaldéhyde au phénol d'environ 2,5:1 à 4,2:1.

3. Procédé suivant la revendication 2 dans lequel la résine phénol-formaldéhyde présente un rapport molaire du formaldéhyde au phénol d'environ 3,2:1 à 4,0:1.

4. Procédé suivant l'une quelconque des revendications 1 à 3 dans lequel la teneur définie au préalable est d'environ 40% en poids du formaldéhyde libre dans le mélange aqueux initial.

5. Procédé suivant l'une quelconque des revendications 1 à 4 dans lequel l'ammoniaque est ajoutée en quantité suffisante pour arriver à un rapport pondéral de l'ammoniaque à la matière sèche de la résine non modifiée d'environ 1,0:100 à 3,0:100.

6. Procédé suivant l'une quelconque des revendications 1 à 5 dans lequel le mélange aqueux: comprenant le résol non modifié est neutralisé jusqu'à un pH d'environ 7,2 à 7,6.

7. Procédé suivant l'une quelconque des revendications 1 à 6 dans lequel le rapport molaire de l'urée au formaldéhyde libre de la résine phénol-formaldéhyde est d'environ 1:1 à 1,75:1.

8. Procédé suivant l'une quelconque des revendications 1 à 7 dans lequel le mélange aqueux est agité pendant un temps au moins suffisant pour assurer l'incorporation mutuelle complète du résol, de l'urée et de l'ammoniaque.

9. Procédé suivant l'une quelconque des revendications 1 à 8 dans lequel le mélange aqueux est maintenu à une température d'environ 5°C à 30°C pendant que l'urée est admise à réagir avec le résol en présence de l'ammoniaque.

10. Procédé suivant l'une quelconque des revendications 1 à 9, **caractérisé en ce que** pendant l'achèvement de la préparation du liant, une huile minérale lubrifiante et un organosilane promoteur d'adhérence sont ajoutés au mélange aqueux.

11. Procédé de mise en oeuvre du liant directement obtenu par le procédé selon l'une des revendications précédentes, dans laquelle ledit liant est pulvérisé sur des fibres minérales pour former un matelas et est ensuite durci à une température élevée.

## Patentansprüche

1. Verfahren zur Herstellung eines phenolischen Bindemittels für Mineralfasern, insbesondere aus Glas, umfassend:
a) einstufige Herstellung eines Phenol-Formaldehyd-Resols, das in Wasser löslich ist, durch:
1/ Herstellung einer wässrigen Anfangsmischung, die Formaldehyd und Phenol umfaßt,
2/ Halten der wäßrigen Mischung bei einer ersten Temperatur von etwa 40°C bis 50°C während der Zugabe eines basischen Polymerisationskatalysators,
3/ Erhöhenlassen der Temperatur der wäßrigen Mischung bis zu einer zweiten Temperatur zwischen etwa 60°C und 80°C,
4/ Halten der wäßrigen Mischung bei der zweiten Temperatur während der Umsetzung von Phenol und Formaldehyd zur Bildung des Phenol-Formaldehyd-Resols, das in Wasser löslich ist, bis der freie Formaldehyd der wäßrigen Lösung auf einen vorher festgelegten definierten Wert fällt,
5/ Abkühlung der wäßrigen Mischung bis zu einer dritten Temperatur zwischen 20°C und 30°C und
6/ Neutralisation der wäßrigen Mischung nach der Abkühlung von a)5/,
b) Herstellung einer wäßrigen Reaktionsmischung, die aus Phenol-Formaldehyd-Resol, Harnstoff und Ammoniak besteht, nach der Neutralisation a)6/,
c) zwischenzeitliches Reagierenlassen von Harnstoff mit dem Phenol-Formaldehyd-Resol, vorzugsweise während mindestens etwa 30 Minuten nach dem Mischen von Harnstoff und dem Resol zwecks Bildung eines modifizierten Harzes und
d) anschließendes Beenden der Herstellung des Bindemittels durch Zugabe eines Katalysators zur Härtung des modifizierten Resols.

2. Verfahren nach Anspruch 1, bei welchem das Phenol-Formaldehyd-Harz ein Molverhältnis von Formaldehyd zu Phenol von etwa 2,5:1 bis 4,2:1 aufweist.

3. Verfahren nach Anspruch 2, bei welchem das Phenol-Formaldehyd-Harz ein Molverhältnis von Formaldehyd zu Phenol von etwa 3,2:1 bis 4,0:1 aufweist.

4. Verfahren nach irgendeinem der Ansprüche 1 bis 3, bei welchem der vorher festgelegte definierte Wert etwa 40 Gewichtsprozent des freien Formaldehyds in der wäßrigen Anfangsmischung beträgt.

5. Verfahren nach irgendeinem der Ansprüche 1 bis 4, bei welchem der Ammoniak in einer ausreichenden Menge, um zu einem Gewichtsverhältnis von Ammoniak zu Trockensubstanz des nicht-modifizierten Harzes von etwa 1,0:100 bis 3,0:100 zu gelangen, zugesetzt wird.

6. Verfahren nach irgendeinem der Ansprüche 1 bis 5, bei welchem die wäßrige Mischung, die das nicht-modifizierte Resol umfaßt, bis zu einem pH von etwa 7,2 bis 7,6 neutralisiert wird.

7. Verfahren nach irgendeinem der Ansprüche 1 bis 6, bei welchem das Gewichtsverhältnis von Harnstoff zu freiem Formaldehyd des Phenol-Formaldehyd-Harzes etwa 1:1 bis 1,75:1 beträgt.

8. Verfahren nach irgendeinem der Ansprüche 1 bis 7, bei welchem die wäßrige Mischung während einer Zeit umgewälzt wird, die mindestens ausreicht, um die vollständige wechselseitige Einverleibung von Resol, Harnstoff und Ammoniak sicherzustellen.

9. Verfahren nach irgendeinem der Ansprüche 1 bis 8, bei welchem die wäßrige Mischung bei einer Temperatur von etwa 5°C bis 30°C gehalten wird, während der Harnstoff mit dem Resol in Anwesenheit des Ammoniak reagieren gelassen wird.

10. Verfahren nach irgendeinem der Ansprüche 1 bis 9, **dadurch gekennzeichnet, daß** während der Beendigung der Herstellung des Bindemittels der wäßrigen Mischung ein schmierendes Mineralöl und ein Organosilan-Haftvermittler zugesetzt werden.

11. Verfahren zur Verwendung des direkt gemäß dem Verfahren nach einem der vorangehenden Ansprüche erhaltenen Bindemittels, bei welchem das Bindemittel über den Mineralfasern pulverisiert wird, um eine Matte zu bilden, und dann bei einer erhöhten Temperatur gehärtet wird.

## Claims

1. Process for the preparation of a phenolic binder for mineral fibres, especially glass fibres, comprising:
a) preparing in one step a water-soluble phenol-formaldehyde resol by:
1/ preparing an initial aqueous mixture comprising formaldehyde and phenol,
2/ maintaining the aqueous mixture at a first temperature of approximately from 40°C to 50°C during the addition of a basic polymerisation catalyst,
3/ allowing the temperature of the aqueous mixture to rise to a second temperature of approximately from 60°C to 80°C,
4/ maintaining the aqueous mixture at the second temperature during the reaction of the phenol and the formaldehyde to form the water-soluble phenol-formaldehyde resol until the amount of free formaldehyde in the aqueous mixture falls to a value that has been defined in advance,
5/ cooling the aqueous mixture to a third temperature of from 20°C to 30°C, and
6/ neutralising the aqueous mixture after cooling a) 5/,
b) preparing an aqueous reaction mixture composed of the said phenol-formaldehyde resol, urea and ammonia after the neutralisation a) 6/,
c) allowing the urea to react with the phenol-formaldehyde resol, while waiting preferably for at least approximately 30 minutes after the urea and the resol have been mixed, to form a modified resin, and
d) then completing the preparation of the binder by adding a catalyst for the hardening of the modified resol.

2. Process according to claim 1, wherein the molar ratio of formaldehyde to phenol in the phenol-formaldehyde resin is approximately from 2.5:1 to 4.2:1.

3. Process according to claim 2, wherein the molar ratio of formaldehyde to phenol in the phenol-formaldehyde resin is approximately from 3.2:1 to 4.0:1.

4. Process according to any one of claims 1 to 3, wherein the value defined in advance is approximately 40% by weight of the free formaldehyde in the initial aqueous mixture.

5. Process according to any one of claims 1 to 4, wherein the ammonia is added in a sufficient amount to obtain a ratio by weight of ammonia to the dry material of the unmodified resin of approximately from 1.0:100 to 3.0:100.

6. Process according to any one of claims 1 to 5, wherein the aqueous mixture comprising the unmodified resol is neutralised to a pH of approximately from 7.2 to 7.6.

7. Process according to any one of claims 1 to 6, wherein the molar ratio of urea to free formaldehyde in the phenol-formaldehyde resin is approximately from 1:1 to 1.75:1.

8. Process according to any one of claims 1 to 7, wherein the aqueous mixture is stirred for a period of time that is at least sufficient to ensure the complete mutual incorporation of the resol, the urea and the ammonia.

9. Process according to any one of claims 1 to 8, wherein the aqueous mixture is maintained at a temperature of approximately from 5°C to 30°C while the urea is allowed to react with the resol in the presence of the ammonia.

10. Process according to any one of claims 1 to 9, **characterised in that,** during completion of the preparation of the binder, a lubricating mineral oil and an organosilane adhesion promoter are added to the aqueous mixture.

11. Method of using the binder obtained directly by the process according to one of the preceding claims, wherein the said binder is atomised onto mineral fibres to form a mat and is then hardened at elevated temperature.
